(19) **Europäisches Patentamt / European Patent Office / Office européen des brevets**

(11) **EP 2 695 006 B2**

(12) # NOUVEAU FASCICULE DE BREVET EUROPEEN
Après la procédure d'opposition

(45) Date de publication et mention de la décision concernant l'opposition:
**06.04.2022 Bulletin 2022/14**

(45) Mention de la délivrance du brevet:
**14.10.2015 Bulletin 2015/42**

(21) Numéro de dépôt: **12716306.1**

(22) Date de dépôt: **05.04.2012**

(51) Classification Internationale des Brevets (IPC):
**G02B 5/18** (2006.01)  **G02B 5/00** (2006.01)
**B24D 15/00** (2006.01)  **B24D 15/10** (2006.01)
**G07D 7/12** (2016.01)  **G07D 7/00** (2016.01)

(52) Classification Coopérative des Brevets (CPC):
**B42D 25/29; G02B 5/008; G02B 5/1809; G07D 7/003;** B42D 2035/24; B42D 2035/36

(86) Numéro de dépôt international:
**PCT/EP2012/056301**

(87) Numéro de publication internationale:
**WO 2012/136777 (11.10.2012 Gazette 2012/41)**

(54) **COMPOSANT OPTIQUE DE SECURITE A EFFET TRANSMISSIF, FABRICATION D'UN TEL COMPOSANT ET DOCUMENT SECURISÉ EQUIPÉ D'UN TEL COMPOSANT**

OPTISCHE SICHERHEITSKOMPONENTE MIT EINEM DURCHLÄSSIGEN EFFEKT, HERSTELLUNG EINER DERARTIGEN KOMPONENTE UND SICHERES DOKUMENT MIT EINER SOLCHEN KOMPONENTE

OPTICAL SAFETY COMPONENT HAVING A TRANSMISSIVE EFFECT, MANUFACTURE OF SUCH A COMPONENT, AND SECURE DOCUMENT PROVIDED WITH SUCH A COMPONENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.04.2011 FR 1153068**

(43) Date de publication de la demande:
**12.02.2014 Bulletin 2014/07**

(73) Titulaires:
• **SURYS**
  **77607 Marne-la-Vallée Cedex 3 (FR)**
• **Université Jean Monnet de Saint-Etienne**
  **42023 Saint Etienne Cedex 2 (FR)**

(72) Inventeurs:
• **PETITON, Valéry**
  **F-77440 Vendrest (FR)**
• **SAUVAGE-VINCENT, Jean**
  **F-94100 Saint Maures Des Fosses (FR)**
• **NOIZET, Alexandre**
  **F-77600 Bussy Saint Georges (FR)**
• **JOURLIN, Yves**
  **F-42000 Saint Etienne (FR)**

(74) Mandataire: **Osha Liang**
  **2, rue de la Paix**
  **75002 Paris (FR)**

(56) Documents cités:
| | |
|---|---|
| EP-A1- 1 801 546 | EP-A1- 2 228 671 |
| EP-A1- 2 228 672 | WO-A1-01/44839 |
| WO-A1-03/059643 | WO-A1-2008/031170 |
| WO-A1-2010/063737 | US-A1- 2007 200 940 |
| US-A1- 2009 190 223 | US-A1- 2010 307 705 |

• **IRVING ET AL: "Butterfly Wings Inspire Anti-Counterfeit Devices", INTERNET CITATION, mars 2011 (2011-03), page 1, XP002662455, Extrait de l'Internet: URL:http://www.accn.ca/index.php?ci_id=2828&la_id=1 1 of [extrait le 2011-10-31]**
• **MOHAMADREZA NAJIMINAINI1 ET AL: "Optical transmission analysis of nano-hole arrays as a function of angle of incident light", OSA / BIOMED/DH 2010,, 11 avril 2010 (2010-04-11), pages 1-3, XP007919659,**
• **JOURLIN et al.: "Spatially and polarization resolved plasmon mediated transmission through continuous metal films", Optics Express, vol. 17, no. 14, July 2009 (2009-07), pages 12155-12166,**

EP 2 695 006 B2

**Description**

**DOMAINE DE L'INVENTION**

La présente invention concerne le domaine du marquage de sécurité. Plus particulièrement, elle se rapporte à un composant optique de sécurité à effet transmissif pour vérifier l'authenticité d'un document, à un procédé de fabrication d'un tel composant et à un document sécurisé équipé d'un tel document.

**ETAT DE L'ART**

On connaît de nombreuses technologies pour l'authentification de documents ou de produits, et notamment pour la sécurisation de documents tels que des documents de valeur de type billets de banque, des passeports ou autres documents d'identification. Ces technologies visent à la production de composants optiques de sécurité dont les effets optiques en fonction des paramètres d'observation (orientation par rapport à l'axe d'observation, position et dimensions de la source lumineuse, etc.) prennent des configurations très caractéristiques et vérifiables. Le but général de ces composants optiques est de fournir des effets nouveaux et différenciés, à partir de configurations physiques difficilement reproductibles.

Parmi ces composants, on appelle DOVID pour "Diffractive Optical Variable Image Device", les composants optiques produisant des images diffractives et variables que l'on appelle communément les hologrammes. Ces composants sont généralement observés en réflexion.

On s'intéresse dans la présente demande à des composants optiques de sécurité pouvant être contrôlés en transmission.

Parmi ces composants, le brevet US 6428051 décrit un document de valeur, de type billet de banque, comprenant une ouverture formant une fenêtre recouverte par un film de sécurité, le film de sécurité étant fixé par un adhésif sur le pourtour de la fenêtre formée dans le document et comprenant un certain nombre de signes d'authentification.

Dans l'article de I. Aubrecht et al. (« Polarization-sensitive multilayer diffractive structures for document security», Proceedings of SPIE Vol. 7358, 2009) une structure multicouches est décrite présentant des effets de transmission résonante basée sur l'excitation de modes plasmoniques aux interfaces entre une couche métallique structurée et deux couches diélectriques encapsulant la couche métallique. Cet article montre la dépendance en polarisation de l'effet et propose un système de contrôle de l'authentification du composant ainsi réalisé basé sur l'analyse de la polarisation de l'onde transmise.

La demande de brevet US2010/0307705 décrit de façon générale un document de sécurité avec une région présentant des motifs métalliques nanométriques pour l'excitation de plasmons volumiques ou surfaciques et la génération d'effets résonants.

Les structures décrites dans les documents ci-dessus mentionnés, si elles présentent des effets remarquables en transmission ou en réflexion, ne sont cependant pas facile à authentifier à l'oeil nu, notamment pour une authentification en transmission par un utilisateur peu expérimenté.

La présente invention présente un composant optique de sécurité à effet plasmonique, pouvant être contrôlé en transmission à l'oeil nu avec une grande facilité et une grande sécurité pour offrir à un utilisateur non initié un maximum de confort tout en garantissant une très grande fiabilité dans l'authentification.

**RESUME DE L'INVENTION**

Selon un premier aspect, l'invention concerne un composant optique de sécurité à effet plasmonique destiné à être observé en transmission, ledit composant optique comprenant deux couches en matériau diélectrique transparent et une couche métallique agencée entre lesdites couches en matériau diélectrique pour former deux interfaces diélectrique - métal et structurée pour former sur une partie au moins de sa surface des ondulations aptes à coupler des modes de plasmon de surface supportés par lesdites interfaces diélectrique - métal avec une onde lumineuse incidente. Les ondulations sont agencées dans une première zone de couplage selon une première direction principale et dans au moins une deuxième zone de couplage distincte de ladite première zone de couplage selon une deuxième direction principale sensiblement perpendiculaire à la première direction principale, ladite couche métallique étant continue sur chacune desdites zones de couplage.

Un tel composant présente un effet de transmission extraordinaire dans une bande spectrale centrée sur une longueur d'onde dite de centrage, définie par les caractéristiques des ondulations des zones de couplage, et pour un observateur, des effets de variation de couleur avec l'angle d'observation du composant variables selon les zones de couplage, permettant une authentification facile et fiable du composant de sécurité.

Plus précisément, au moins deux desdites zones de couplage présentant des ondulations agencées selon deux directions principales sensiblement perpendiculaires, le composant permet de présenter lors d'une observation en transmission un contraste visuel marqué entre une première zone stable en couleur avec l'angle d'observation du composant et une seconde zone fortement variable.

Selon une variante, ces zones de couplage forment des motifs complémentaires, permettant de faciliter encore l'authentification par un observateur, les motifs permettant de rendre plus intuitif pour l'observateur les mouvements qui permettront de générer une forte variation de couleur.

Selon une variante, au moins une partie des ondulations sont agencées de façon concentrique ou radiale, de telle sorte à donner au composant une symétrie axiale. L'observation est alors indépendante de l'azimut.

Selon une variante, la couche métallique comprend en outre une zone non structurée. Cette zone, de forte densité optique, permet de mettre encore davantage en valeur les zones de couplage qui présentent dans une bande spectrale donnée une transmission extraordinaire due à l'effet plasmonique.

Avantageusement, les ondulations dans les zones de couplage présentent un pas compris entre 100 nm et 600 nm et une profondeur comprise entre 10% et 30% du pas. Les pas des différentes zones de couplage peuvent être identiques pour présenter des couleurs similaires à un observateur, ou au contraire différentes selon l'effet visuel recherché.

Avantageusement, la différence des indices de réfraction desdits matériaux diélectriques transparents dans la bande spectrale visée, de préférence le visible, formant chacune desdites couches est inférieure à 0,1, permettant un effet de transmission extraordinaire optimal à ladite longueur d'onde de centrage.

Selon une variante, une partie au moins de la couche métallique est formée en argent et son épaisseur est sensiblement comprise entre 20 et 60 nm.

Selon une variante, une partie au moins de la couche métallique est formée en aluminium et son épaisseur est sensiblement comprise entre 10 et 30 nm.

Selon un exemple de réalisation, la couche métallique peut être formée d'un seul métal. La couche est alors d'épaisseur sensiblement constante.

Selon un autre exemple de réalisation, la couche métallique comprend au moins deux parties formées chacune d'un métal différent. Cela peut permettre des effets visuels différents, tant en réflexion qu'en transmission dans la bande spectrale de l'effet plasmonique.

Selon un deuxième aspect, l'invention concerne un élément optique de sécurité destiné à la sécurisation d'un document et comprenant au moins un composant optique de sécurité selon l'une le premier aspect. L'élément de sécurité peut comprendre d'autres composants de sécurité, par exemple des composants holographiques.

Selon une variante, l'élément de sécurité comprend d'autres couches selon les besoins requis pour l'application finale ; par exemple l'élément de sécurité peut comprendre en plus des couches actives pour l'effet plasmonique un film support portant une desdites couches en matériau diélectrique et/ou un film adhésif disposé sur l'une desdites couches en matériau transparent diélectrique. Ces films sont neutres pour l'effet plasmonique car ils n'altèrent ou n'influencent pas l'interface diélectrique - métal. Ils permettent de faciliter l'adhésion sur le document à sécuriser et/ou la mise en oeuvre de manière industrielle.

Selon un troisième aspect, l'invention concerne un document sécurisé comprenant un support et un élément optique de sécurité selon le second aspect, l'élément optique de sécurité étant fixé sur ledit support, ledit support comprenant une zone de transparence au niveau de laquelle est agencé ledit composant optique de sécurité à effet plasmonique.

Le document sécurisé, par exemple un document de valeur de type billet de banque ou un document d'authentification, type carte d'identité, peut, grâce au composant optique de sécurité à effet plasmonique selon l'invention, être facilement contrôlé en transmission, et sa résistance à la contrefaçon est élevée du fait de la technologie mise en oeuvre.

Selon une variante, le composant optique de sécurité selon le premier aspect ou l'élément optique de sécurité selon le second aspect est encapsulé dans le support du document sécurisé. Des zones de transparence sont prévues de part et d'autre du composant optique de sécurité, permettant ainsi le contrôle en transmission.

Selon un quatrième aspect, l'invention concerne une méthode de fabrication d'un composant optique de sécurité à effet plasmonique destiné à être observé en transmission comprenant :

- le dépôt d'une couche métallique sur une première couche en matériau diélectrique transparent,
- l'encapsulation de ladite couche métallique par une seconde couche en matériau diélectrique transparent, pour former deux interfaces diélectrique - métal, la couche métallique étant structurée pour former sur une partie au moins de sa surface des ondulations aptes à coupler des modes de plasmon de surface supportés par lesdites interfaces diélectrique - métal avec une onde lumineuse incidente, les ondulations étant agencées dans une première zone de couplage selon une première direction principale et dans au moins une deuxième zone de couplage distincte de ladite première zone de couplage, selon une direction principale sensiblement perpendiculaire à ladite première direction principale, ladite couche métallique étant continue sur chacune desdites zones de couplage.

Selon une variante, ladite première couche en matériau diélectrique est structurée pour former lesdites ondulations et la couche métallique est déposée avec une épaisseur sensiblement constante sur ladite première couche ainsi structurée.

Selon une variante, le dépôt de la couche métallique comprend le dépôt d'une première couche comprenant un premier métal sur une première partie de la surface de ladite première couche en matériau diélectrique et le dépôt d'au moins une seconde couche comprenant un second métal sur une deuxième partie de la surface de ladite première couche en matériau diélectrique.

Selon une variante, le dépôt de la couche métallique est fait de manière sélective permettant de définir des motifs macroscopiques visibles en transparence à l'oeil nu. Ces motifs correspondent à des zones démétallisées, qui présenteront ainsi une transparence dans le visible, et pourront être utilisés pour renforcer la résistance à la contrefaçon du composant et optionnellement permettre une meilleure lisibilité du design pour la personne en charge du contrôle en détourant par exemple une des zones colorées.

## BREVE DESCRIPTION DES FIGURES

D'autres caractéristiques et avantages de l'invention apparaîtront à la lecture de la description qui suit, illustrée par les figures sur lesquelles :

Les figures 1A et 1B, des vues partielles, respectivement selon un plan de coupe et de dessus, d'un composant optique de sécurité selon l'invention ;

Les figures 2A et 2B, des simulations numériques montrant la variation de l'intensité de l'onde transmise en fonction de la longueur d'onde et de l'angle d'incidence dans un composant du type de la figure 1A, respectivement en mode TM et TE avec un azimut de 0° et 90°;

Les figures 3A à 3D des figures illustrant l'effet obtenu par observation du composant en transmission, dans différentes configurations ;

La figure 4, un exemple de réalisation d'un composant présentant deux zones structurées avec deux vecteurs réseaux orthogonaux ;

Les figures 5A et 5B des simulations numériques montrant la variation de l'intensité de l'onde transmise en fonction de la longueur d'onde et du tilt, dans les deux zones du composant de la figure 4 ;

Les figures 6A et 6B des courbes de transmission d'un composant du type de celui illustré sur la figure 4 en fonction de la longueur d'onde pour deux angles d'incidence ;

Les figures 7A à 7D des schémas illustrant dans différentes configurations un exemple de composant de sécurité selon l'invention ;

Les figures 8A à 8C, deux autres exemples de composant de sécurité selon l'invention ;

Les figures 9A et 9B, un autre exemple de composant de sécurité selon l'invention ;

La figure 10, une figure illustrant par une vue en coupe une variante d'un composant de sécurité selon l'invention ;

Les figures 11A à 11C, des vues respectivement de dessus, de dessous et en coupe d'un exemple de document sécurisé comprenant un composant de sécurité selon l'invention ;

Les figures 12A et 12B des vues en coupe d'un exemple de document sécurisé comprenant un composant optique de sécurité selon l'invention, selon deux variantes.

## DESCRIPTION DETAILLEE

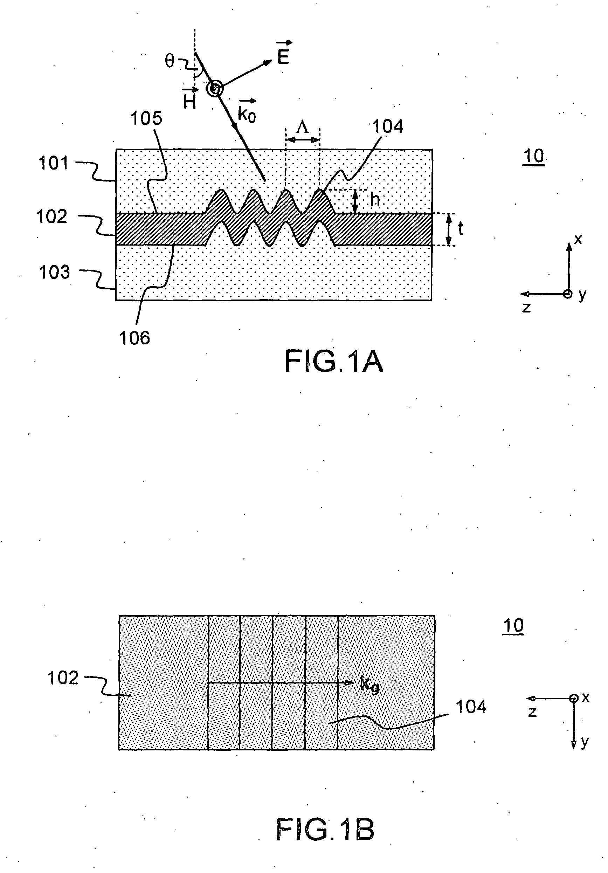

Les figures 1A et 1B représentent selon des vues partielles respectivement une vue de coupe et une vue de dessus d'un composant de sécurité 10 selon un exemple de réalisation de l'invention.

Le composant de sécurité selon l'invention comprend généralement une couche métallique continue 102, d'épaisseur t sensiblement constante, typiquement quelques dizaines à 80 nanomètres, agencée entre deux couches en matériau diélectrique transparent 101, 103 pour former deux interfaces diélectrique - métal 105, 106. Le métal peut être tout métal susceptible de supporter une résonance plasmonique, et de façon préférentielle l'argent, l'aluminium, l'or, le chrome, le cuivre. Les matériaux diélectriques peuvent être tout matériau permettant une « association non destructive » avec le métal, c'est-à-dire ne risquant pas de provoquer une réaction physico-chimique, par exemple de type oxydation, qui dégraderait l'effet à contrôler. Les matériaux diélectriques utilisés pour les couches 101, 103 présentent des indices de réfraction sensiblement identiques, typiquement autour de 1,5, la différence des indices étant avantageusement inférieure à 0,1. Par exemple, la couche 101 en matériau diélectrique et d'indice de réfraction $n_1$ est une couche en matériau polymère destinée à l'embossage et la couche 103 est une couche d'encapsulation en matériau diélectrique de type polymère, d'indice de réfraction $n_2$ sensiblement égal à $n_1$ Les couches 101, 103 sont transparentes dans le visible. Il est connu qu'à l'interface entre un matériau conducteur, par exemple un métal, et un matériau diélectrique, peut se propager une onde électromagnétique de surface associée à une oscillation collective d'électrons à la surface, appelée plasmon de surface. Ce phénomène est par exemple décrit dans l'ouvrage de base de H. Raether (« Surface plasmons », Springer-Verlag, Berlin Heidelberg). Le couplage d'une onde lumineuse incidente à un mode plasmonique peut être obtenu de différentes façons, notamment par la structuration de l'interface pour former un réseau de couplage.

Ce principe de base est mis en oeuvre dans le composant de sécurité selon l'invention pour obtenir des effets remarquables en transmission.

Dans le composant de sécurité 10, la couche métallique 102 est structurée pour former au moins deux zones de couplage distinctes avec une onde lumineuse incidente. Chaque zone de couplage comprend un ensemble d'ondulations sensiblement rectilignes et parallèles, les ondulations des différentes zones présentant des directions non parallèles. Dans chaque zone de couplage, la couche métallique est continue, déformée de telle sorte à former lesdites ondulations. Les figures 1A et 1B représentent de façon schématique un ensemble d'ondulations 104 de l'une des zones de couplage. Chaque ensemble d'ondulations est caractérisé par son pas A, l'amplitude h de l'ondulation (hauteur entre le pic et le creux) et l'épaisseur t de la couche métallique au niveau de la zone de couplage. Typiquement, le pas du réseau est compris entre 100 nm et 600 nm, avantageusement entre 200 nm et 500 nm et la hauteur est comprise entre 10% et 45% du pas du réseau, avantageusement entre 10% et 30%. Par ondulation, on entend une déformation continûment variable de la couche métallique qui reste continue sur l'ensemble de la zone de couplage. Le profil des ondulations est avantageusement un profil sinusoïdal ou quasi-sinusoïdal, la déposante ayant montré qu'une déformation du profil sinusoïdal était acceptable avec un rapport cyclique maintenu entre 40% et 60%. L'épaisseur t de la couche métallique doit être suffisamment fine pour permettre l'excitation et le couplage de modes de plasmons de surface aux deux interfaces métal/diélectrique, permettant ainsi un effet de transmission résonante comme cela sera décrit plus en détails ci-dessous.

On considère une onde incidente de polarisation TM (onde transverse magnétique, c'est-à-dire pour laquelle le champ magnétique **H** est perpendiculaire au plan d'incidence xz qui est le plan de la figure sur la figure 1A) incidente sur le réseau avec un azimut de 0° par rapport au vecteur réseau **k$_g$** et un angle d'incidence θ dans la couche 103 par rapport à l'axe y normal au plan du réseau formé par les ondulations 104. Le vecteur réseau k$_g$, représenté sur la figure 1B, est le vecteur de direction perpendiculaire aux traits du réseau et de norme définie *par k$_g$ = 2π/Λ où Λ est le pas du réseau.*

Pour qu'il y ait couplage, c'est-à-dire transfert d'énergie entre l'onde incidente dans un milieu diélectrique de permittivité relative εd et le mode plasmonique, l'égalité suivante doit être satisfaite (voir H.Raether, précédemment cité) :

$$k_{sp} = n_1 k_0 \sin\theta \pm k_g \qquad (1)$$

Où :

k$_0$ est le nombre d'onde défini par $k_0 = 2\pi/\lambda$
k$_{sp}$ est défini par $k_{sp} = n_{sp}k_0$, où n$_{sp}$ est l'indice effectif du plasmon, donné par

$$n_{sp} = \sqrt{\varepsilon m \varepsilon d /(\varepsilon m + \varepsilon d)} \qquad (2)$$

dans le cas d'une couche métallique d'épaisseur infinie avec εm et εd les permittivités du métal et du matériau diélectrique respectivement.

On peut définir ainsi une longueur d'onde de centrage λ$_0$, longueur d'onde à laquelle le couplage sera assuré à incidence normale (θ = 0°). La longueur d'onde de centrage est définie par :

$$\lambda_0 = \Lambda / n_{sp} \qquad (3)$$

Ainsi le pas du réseau sera choisi en fonction de la longueur d'onde de centrage recherchée.
Avec le pas du réseau fixé, la variation de la longueur d'onde de couplage λ est exprimée à angle d'incidence non nul et azimut nul par rapport au vecteur réseau par l'équation (1) que l'on peut développer sous la forme de deux équations :

$$\lambda = (n_{sp} - n_1 \sin\theta) \times \Lambda \qquad (4)$$

$$\lambda = (n_{sp} + n_1 \sin\theta) \times \Lambda \qquad (5)$$

Il existe alors deux longueurs d'onde pour lesquelles le couplage de l'onde incidente avec un plasmon de surface sera possible, correspondant à la propagation du plasmon en mode co-propagatif et contra-propagatif respectivement.
Lorsque la couche métallique est d'épaisseur finie et, de plus, que son épaisseur est de l'ordre de grandeur de la profondeur de pénétration du champ électromagnétique du mode de plasmon dans le métal (qui est d'environ $1/(k_0(n_{sp}^2+Re(|\varepsilon_m|))^{1/2})$) le champ électromagnétique du mode de plasmon à l'interface supérieur de la couche métallique « voit » aussi l'interface inférieur et doit par conséquent aussi satisfaire les conditions aux limites des champs à cet interface inférieur. Il s'ensuit qu'il existe alors deux modes de plasmon pouvant se propager le long de la couche métallique qui, tous deux, ont un maximum de champ aux interfaces supérieur et inférieur de la couche métallique: un mode de plasmon dont le champ magnétique transverse H est pair (donc le champ électrique longitudinal, responsable de l'oscillation longitudinale des électrons, impair, avec un passage par zéro dans la couche métallique), dit le mode de plasmon « long range », et un mode de plasmon dont le champ H est impair, plus fortement absorbé par le métal, dit le mode de plasmon « short range ». Leurs indices effectifs sont voisins lorsque l'épaisseur de la couche métallique n'est pas trop faible (supérieure à 15 nm, par exemple) et ces modes sont tous deux couplés en présence d'un réseau lorsque l'onde incidente émane d'une source de lumière peu cohérente spatialement et temporellement comme une lampe d'éclairage ou la lumière naturelle du soleil. Ainsi, lorsque la condition de couplage est satisfaite, le champ des deux modes de plasmons couplés (ou « excités ») possède un maximum à l'interface inférieur de la couche métallique aussi et peut donc, grâce à la présence du réseau, rayonner dans le milieu transmis (couche 103) et ainsi permettre à l'énergie lumineuse de traverser la couche métallique continue et ainsi produire un pic de transmission, d'où le terme de transmission résonnante.

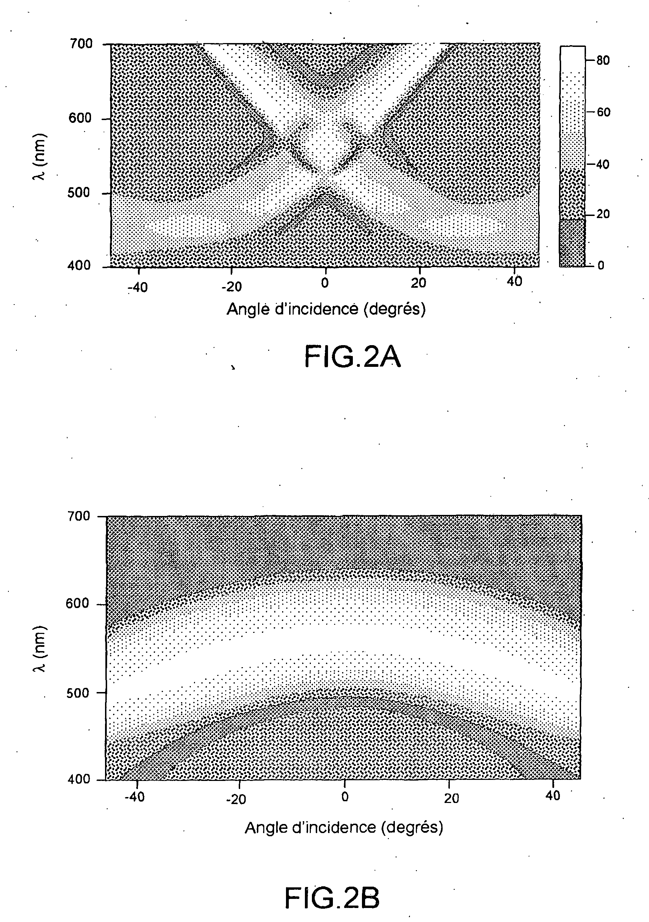

La figure 2A représente la transmission calculée dans un composant du type de celui de la figure 1A, en mode TM, avec un azimut de 0° par rapport au vecteur réseau, en fonction de l'angle d'incidence θ et de la longueur d'onde incidente λ. L'angle d'incidence θ est l'angle d'incidence dans le milieu de la couche 103 défini par rapport à la normale au réseau. Pour ces calculs, un logiciel de calcul de propagation d'ondes électromagnétiques est utilisé, par exemple le logiciel Gsolver© (développé par Grating Solver Development Company http://www.gsolver.com/). Les ondulations présentent un profil sinusoïdal avec un pas de 300 nm et une profondeur de 60 nm. La couche métallique est en argent et présente une épaisseur de 40 nm. Elle est entourée de deux couches en matériaux diélectrique de type polystyrène. La longueur d'onde de centrage est de 560 nm. Dans une bande spectrale (typiquement 50 à 100 nm) centrée sur cette longueur d'onde, la transmission à incidence normale (θ = 0°) est maximale. Lorsque l'angle d'incidence augmente, on observe une variation de la longueur d'onde de couplage, c'est-à-dire la longueur d'onde à laquelle il y aura un effet de transmission résonnante par le composant. On constate une symétrie axiale par rapport à l'axe y autour de l'angle d'incidence 0°. L'effet visuel obtenu sera donc identique selon que l'on tourne l'échantillon dans un sens ou dans un autre.

Le même calcul en mode TE (onde transverse électrique, c'est-à-dire pour laquelle le champ magnétique E est perpendiculaire au plan d'incidence xz qui est le plan de la figure sur la figure 1 A) montre une transmission quasiment nulle du composant.

Différentes simulations ont été effectuées en fonction des différents paramètres du composant pour en mesurer l'influence. Notamment, on peut montrer que pour un effet maximal de couplage, il est préférable de limiter la profondeur des oscillations (paramètre h sur la figure 1A) entre 10% et 20% du pas.

Des simulations ont également été réalisées avec différents types de métaux, en faisant varier l'épaisseur. Ces calculs montrent généralement un élargissement de la bande spectrale de couplage lorsque l'épaisseur de la couche métallique diminue, avec une amplitude de transmission résonnante moindre lorsque l'épaisseur de la couche métallique augmente, la bande spectrale de couplage s'affine mais perd en intensité. Ainsi, une épaisseur de la couche métallique optimale pourra être calculée pour avoir un effet visuel important avec une bande spectrale de couplage suffisante. Par exemple, la déposante a montré qu'une couche métallique en argent était particulièrement avantageuse, avec une épaisseur comprise entre 35 nm et 50 nm. D'autres métaux ont été testés. Par exemple, l'aluminium peut également être utilisé pour réaliser un composant à effet plasmonique selon l'invention. L'aluminium absorbant très fortement dans le visible, la couche métallique devra être plus fine que celle que l'on aurait avec de l'argent, typiquement entre 16 et 25 nm. La simulation d'une structure avec une couche métallique en aluminium présente cependant par rapport à l'argent une bande spectrale de couplage décalée vers les plus courtes longueurs d'onde et une amplitude de la transmission résonnante inférieure du fait des pertes Joule supérieures des modes de plasmon dans ce métal.

La déposante a également étudié l'influence de la déformation du profil sinusoïdal des ondulations sur l'efficacité du couplage. On constate que la modification du profil d'une sinusoïde vers un profil d'ondulation présentant un rapport cyclique déséquilibré provoque une baisse rapide du signal de transmission. Avantageusement, le rapport cyclique pourra être compris entre 40% et 60%.

La figure 2B représente une simulation de la transmission du composant 10 dans des conditions identiques aux conditions de calcul de la figure 2A mais dans laquelle on a fait subir à l'échantillon une rotation en azimut autour de l'axe x de 90° et en sélectionnant la polarisation TE. On observe toujours à incidence normale une transmission résonnante à la longueur d'onde de centrage $\lambda_0$. Par contre, on constate sur cette courbe une stabilité de la longueur d'onde de couplage en fonction de l'angle d'incidence. Autrement dit, le composant est peu sensible dans cette configuration à la rotation de l'échantillon autour de l'axe y, maintenant parallèle au vecteur réseau.

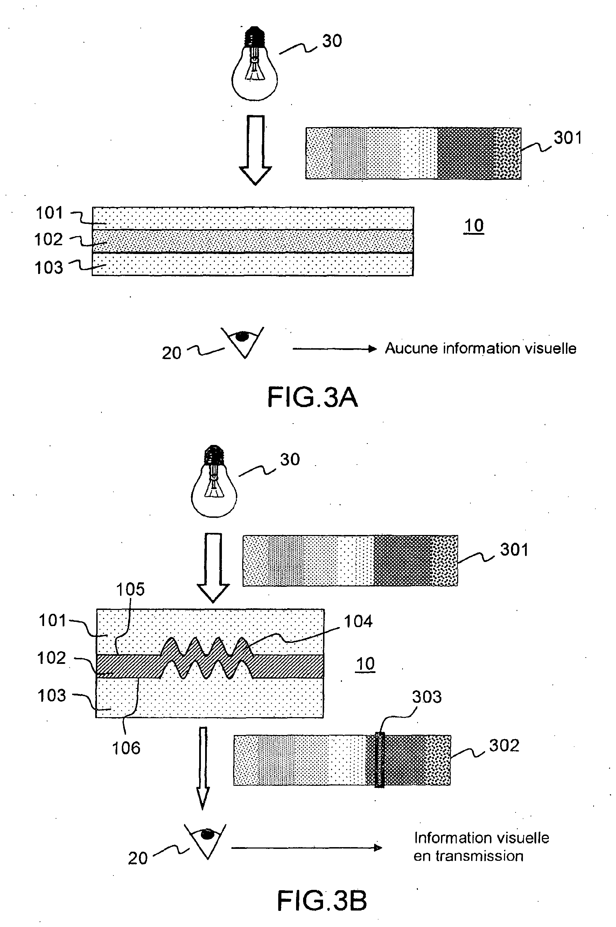

Les figures 3B à 3D illustrent dans 3 configurations d'observation d'un composant de sécurité 10 du type de celui de la figure 1, l'effet de l'azimut φ et de l'angle d'incidence ou tilt θ sur l'impression visuelle d'un observateur. La figure 3A illustre à titre de comparaison l'observation d'un composant de sécurité dont la couche métallique n'est pas structurée.

Sur la figure 3A, le composant 10 comprenant une couche métallique 102 non structurée, agencée entre deux couches diélectriques 101, 103, est éclairé par une source lumineuse 30, par exemple une source blanche dont le spectre est schématisé par un ensemble de couleurs symbolisées par différents pointillés dans le cadre 301. Il s'agit par exemple d'un spectre couvrant toute la lumière du visible. Si un observateur 20 observe la lumière transmise à travers ce composant, il n'a aucune information visuelle. En effet, il n'y a pas de couplage avec une onde plasmonique et la couche métallique se comporte comme un réflecteur. Le flux lumineux incident n'est pas transmis par le composant.

Dans les configurations des figures 3B à 3D, on considère un composant de sécurité 10 avec une couche métallique 102 structurée pour former une zone de couplage 104 avec des ondulations, telle qu'elle a été décrite précédemment en référence aux figures 1A et 1B.

Dans l'exemple de la figure 3B, l'observation est faite pour un azimut de 0° et à incidence normale. Les ondulations 104 forment un réseau de couplage de l'onde incidente avec les plasmons de surface supportés par les interfaces métal - diélectriques 105 et 106, optimisé à incidence normale pour une longueur d'onde donnée par l'équation (3). A cette longueur d'onde, la composante TM de l'onde électromagnétique incidente est transmise par la structure de façon remarquable et un observateur 20 observe une information visuelle colorée correspondant à une bande spectrale fine autour de cette longueur d'onde. Sur le spectre schématisé par le cadre 302 sur la figure 3B, seule la composante lumineuse 303 correspondant à cette bande spectrale est visible par l'observateur.

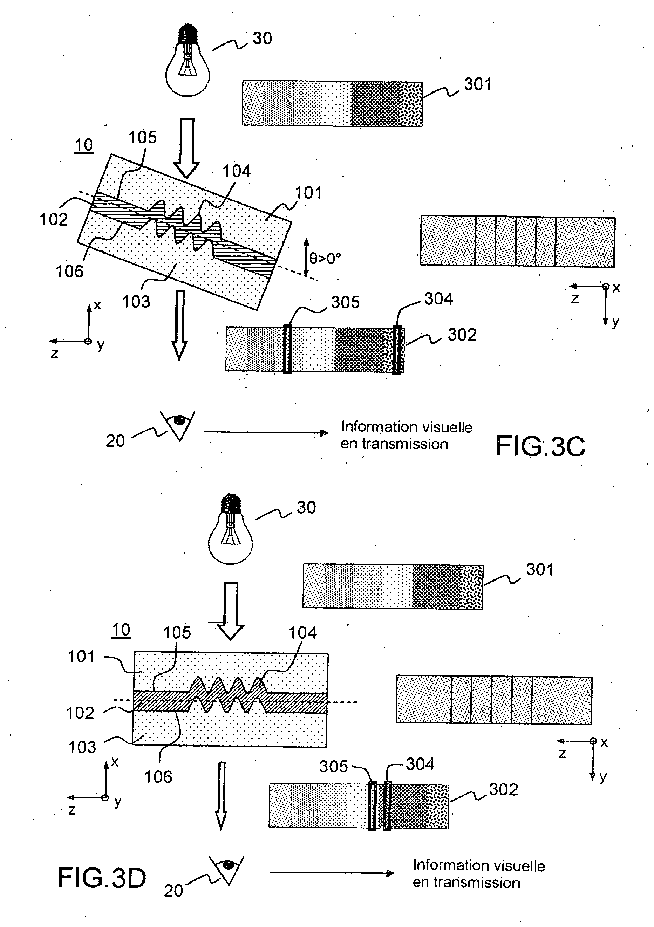

Si un observateur continue d'observer ce même composant à azimut de 0° mais en faisant varier l'angle d'incidence, il observe une variation importante de la couleur, comme cela est représenté sur la figure 3C. En effet, comme cela a été expliqué précédemment, un angle d'incidence (ou tilt) θ non nul autour de l'axe y perpendiculaire au vecteur réseau entraîne une variation forte de la longueur d'onde de couplage, à la fois vers une longueur d'onde plus grande et vers une longueur d'onde plus courte que la longueur d'onde de couplage à incidence normale. En appliquant un tilt au composant, l'observateur voit donc la couleur varier fortement avec l'angle de tilt. Dans l'exemple de la figure 3C, les références 304, 305 du spectre 302 représentent les bandes spectrales vues par l'observateur.

Dans l'exemple de la figure 3D, le composant observé subit une rotation non plus selon l'axe y perpendiculaire au vecteur réseau, mais selon l'axe z parallèle au vecteur réseau. Dans ce cas, on observe une variation faible de la longueur d'onde illustrée par les bandes spectrales 304, 305 du spectre transmis. Cette configuration est en effet équivalente à la configuration illustrée sur la figure 2B dans laquelle on fait tourner le composant autour d'un axe parallèle au vecteur réseau.

Il apparaît ainsi qu'en fonction de l'azimut et du tilt, le comportement du réseau transmissif sera complètement modifié, et c'est notamment cet effet que la déposante a mis en oeuvre pour la réalisation d'un composant de sécurité contrôlable en transmission.

Enfin, il est remarquable que le composant ainsi réalisé puisse être observé par un observateur d'un côté ou de l'autre, c'est-à-dire dans l'exemple des figures 3B à 3D en présentant la couche 101 ou la couche 103 vers la source lumineuse 30, avec les mêmes effets. En effet, la structure diélectrique - métal - diélectrique avec les matériaux diélectrique d'indices de réfraction similaires ou proches, est symétrique, et les couches qui pourraient être ajoutées de part et d'autre en vue de l'utilisation du composant sont neutres, comme cela sera décrit par la suite.

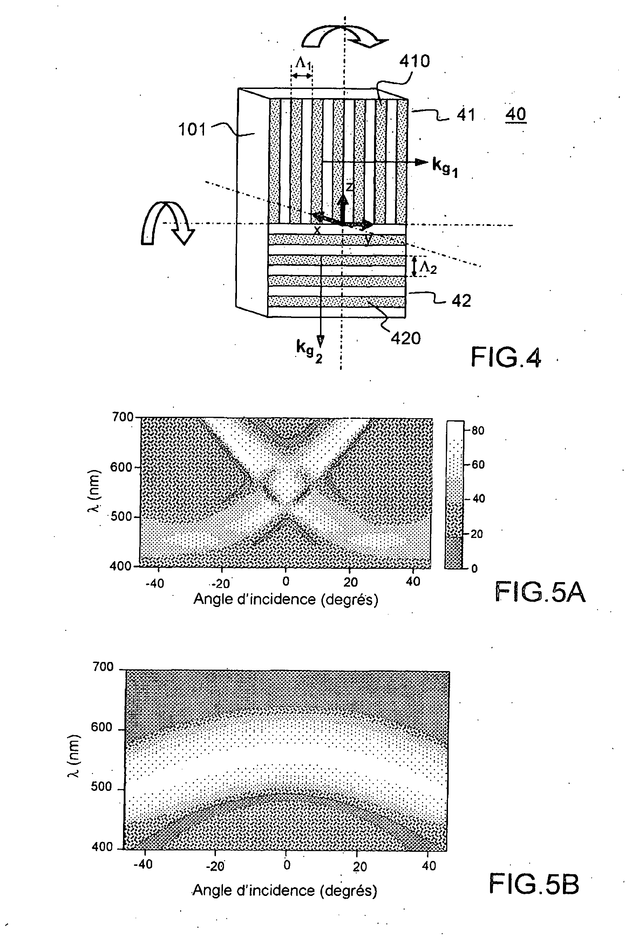

La figure 4 représente un composant optique de sécurité 40 selon un exemple de réalisation de l'invention. Il s'agit d'une coupe au niveau de la couche métallique, seule une des couches en matériau diélectrique étant représentée. Les figures 5A, 5B d'une part, 6A, 6B d'autre part sont des figures ou courbes représentant la transmission calculée du composant de la figure 4 selon différents paramètres.

Le composant 40 comprend deux zones de couplage 41, 42, comprenant chacune un ensemble d'ondulations 410, 420 symbolisées par des bandes en pointillés sur la figure 4. Dans cet exemple, les ondulations de chaque zone de couplage sont orientées selon une direction principale, définissant pour chaque zone de couplage un vecteur réseau, respectivement $k_{g1}$ et $k_{g2}$, de direction perpendiculaire à la direction principale des ondulations et de norme donnée par $k_{gi} = 2\pi/\Lambda_i$ où $\Lambda_i$ est le pas des ondulations dans chacune des zones. Dans cet exemple, les vecteurs réseaux de chaque zone de couplage sont sensiblement orthogonaux. Dans le repère orthonormé x y z de la figure 4, les ondulations 410 de la zone de couplage 41 sont ainsi orientées selon l'axe z (vecteur réseau selon l'axe y), les ondulations 420 de la zone de couplage 42 sont orientées selon l'axe y (vecteur réseau selon l'axe z), l'axe x étant l'axe perpendiculaire à la surface du composant qui est aussi le plan de la figure. Dans cet exemple, les ensembles d'ondulations 410, 420 ont des caractéristiques (notamment le pas et la nature du métal) sensiblement identiques, de telle sorte que la longueur d'onde de centrage soit sensiblement identique pour les deux zones de couplage. Alternativement, un des paramètres pourrait être modifié, par exemple le pas des ondulations, ou la nature du métal et l'épaisseur de la couche, de telle sorte à présenter une longueur d'onde de centrage et donc une « couleur » à incidence normale différente pour un observateur.

Les figures 5A et 5B illustrent la transmission calculée respectivement dans les zones de couplage 41 et 42, en fonction de l'angle d'incidence mesuré autour de l'axe z et de la longueur d'onde, lorsqu'un observateur observe le composant 40 avec un azimut de 0° en lumière blanche. Pour ces calculs, le même logiciel de calcul de propagation d'ondes électromagnétiques est utilisé que précédemment et les conditions sont identiques à celles utilisées pour les simulations présentées sur les figures 2A et 2B.

Dans la zone de couplage 41 du composant, la variation de l'angle d'incidence est faite autour d'un axe perpendiculaire au vecteur réseau. On observe alors une très forte variation de la longueur d'onde de couplage en fonction de l'angle d'incidence (figure 5A). La simulation est effectuée en mode TM dont la déposante a montré que la contribution était largement dominante par rapport à la contribution du mode TE et donc représentative de ce qu'un observateur verra en lumière non polarisée. La déposante a montré qu'une variation de 1° en angle introduit un décalage de 7 nm pour la polarisation TM alors que le décalage est quasi nul en mode TE. Ainsi, à incidence normale, un observateur verra en transmission une couleur verte correspondant à une bande spectrale centrée sur 560 nm environ. En faisant tourner le composant autour de l'axe z, il verra la zone 41 prendre très vite une teinte faite principalement de rouge et d'un peu de bleu, correspondant aux deux longueurs d'onde de couplage liés aux modes co-propagatif et contra-propagatif. Dans la zone de couplage 42, la rotation du composant selon l'axe z correspond à une rotation selon un axe parallèle au vecteur réseau. La figure 5B représente la variation de la transmission en fonction de l'angle d'incidence et de la longueur d'onde calculée en mode TE, dont la contribution est dans cette configuration largement dominante par rapport au mode TM. La variation de couleur observée sur la figure 5B est beaucoup plus faible et la zone 42 restera pour l'observateur dans les teintes vertes.

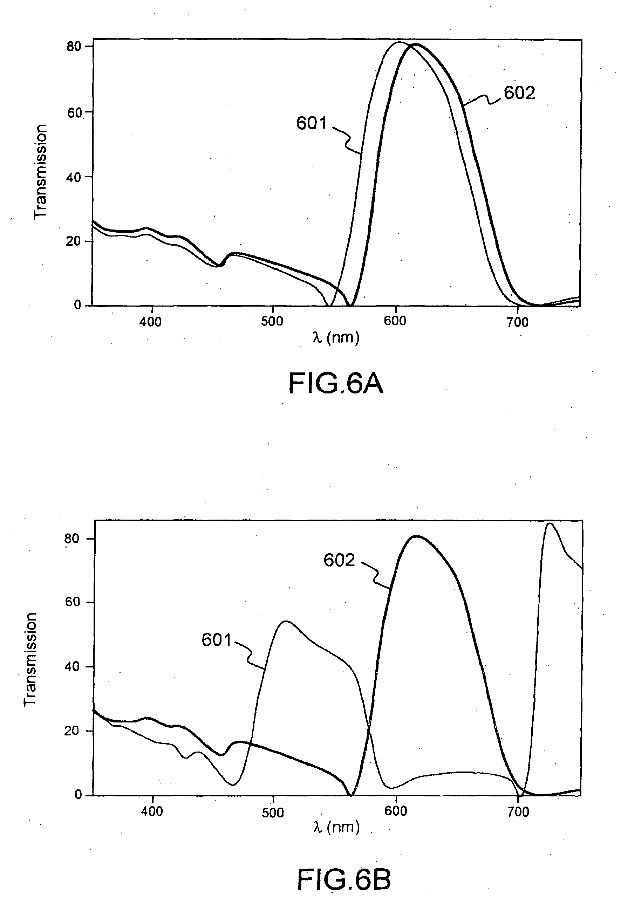

Les figures 6A et 6B représentent ainsi pour un angle d'incidence autour de l'axe z (figure 4) de respectivement 0° (courbe 602) et 15° (courbe 601) la transmission en fonction de la longueur d'onde respectivement dans les zones 42 (figure 6A) et 41 (figure 6B), calculées avec les mêmes paramètres que précédemment. Ces courbes confirment la faible variation de la transmission en fonction de la longueur d'onde observée dans la zone 42 par rapport à la très forte variation de longueur d'onde observée dans la zone 41. Ainsi, la longueur d'onde centrale de la bande spectrale transmise passe de 615 nm à incidence normale, à 601 nm pour un angle de 15° dans la zone 42, tandis qu'elle passe de 615 nm à incidence normale, à 508 nm pour un angle de 15° dans la zone 41.

Ce même observateur, s'il fait maintenant tourner le composant autour de l'axe y (figure 4) verra au contraire une variation très forte de la couleur dans la zone de couplage 42 du type de celle représentée sur la figure 5A calculée en mode TM et une variation faible de la couleur dans la zone de couplage 41, comme cela apparaît sur la figure 5B calculée en mode TE.

Un observateur pourra ainsi en faisant varier l'angle d'incidence du composant selon l'un ou l'autre des axes voir la couleur d'une des zones varier très rapidement tandis que la couleur de l'autre restera assez stable.

Avantageusement, l'orthogonalité des réseaux de couplage formés par les ensembles d'ondulations 410 et 420 est respectée à $\pm 5°$. La déposante a en effet démontré que dans cette gamme de variation de l'angle entre les deux ensembles d'ondulations, on continuait à percevoir une très bonne stabilité en couleur de la zone de couplage dont le vecteur réseau est parallèle à l'axe de rotation du composant et une variation aussi efficace de la longueur d'onde de couplage dans la zone de couplage dont le vecteur réseau est perpendiculaire à l'axe de rotation du composant. Si l'orthogonalité des deux ensembles d'ondulations s'écarte au-delà du seuil d'environ $\pm 5°$, l'effet sera de moins en moins visible, car le contraste entre la zone de couplage stable en couleur et la zone de couplage à variation rapide en couleur sera moindre.

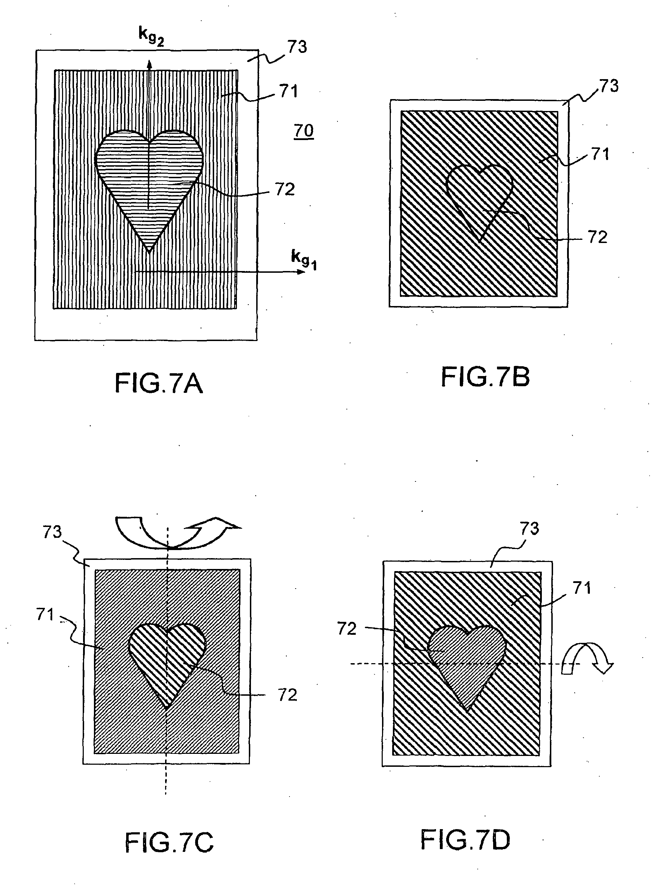

Avantageusement, on pourra donner aux zones 41, 42 de la figure 4 des formes complémentaires et caractéristiques, comme cela est illustré par exemple sur les figures 7A à 7D. La figure 7A est une vue en coupe d'un exemple de composant de sécurité 70, au niveau de la couche métallique 102. Les figures 7B à 7D illustrent l'observation du composant 70 en transmission dans différentes configurations.

Comme cela apparaît sur la figure 7A, une zone de couplage 72 comprenant un ensemble d'ondulations rectilignes et parallèles formant un réseau de couplage de vecteur réseau $\mathbf{k}_{g2}$ présente une forme de coeur. La zone de couplage 71 comprend des ondulations sensiblement rectilignes et parallèles, agencées selon une direction perpendiculaire à celle des ondulations de la zone de couplage 72 pour former un réseau de couplage de vecteur réseau $\mathbf{k}_{g1}$ et sa forme est complémentaire à celle de la zone de couplage 71. Ainsi dans cet exemple, la zone de couplage 71 présente une forme sensiblement rectangulaire avec une interruption des ondulations dans une zone centrale correspondant à la zone de couplage 72. Par ailleurs, le composant de sécurité représenté sur la figure 7A comprend une zone 73 qui forme un cadre autour de la zone de couplage 71 et dans laquelle la couche métallique n'est pas structurée.

Si un observateur observe le composant de sécurité 70 en transmission à incidence normale, il verra une image du type de celle représentée sur la figure 7B, c'est-à-dire de couleur uniforme sur tout le composant (si les paramètres des ensembles d'ondulations sont sensiblement identiques) sauf sur la zone 73 non structurée, qui présente quant à elle une densité optique constante et nettement plus élevée que celles des zones structurées 71, 72. La couleur sera celle correspondante à une bande spectrale centrée sur la longueur d'onde pour laquelle le réseau formé des ondulations est optimisé, par exemple une couleur verte autour de 550 nm, comme dans l'exemple précédent.

Si l'observateur applique une rotation autour d'un axe perpendiculaire au vecteur réseau $\mathbf{k}_{g1}$ (figure 7C), il observera une variation rapide de la couleur de la zone de couplage 71, tandis que la zone de couplage 72 en forme de coeur restera stable en couleur. Si au contraire, l'observateur applique une rotation autour d'un axe perpendiculaire au vecteur réseau $\mathbf{k}_{g2}$ (figure 7D), il observera une variation rapide de la couleur de la zone de couplage 72 en forme de coeur, tandis que la zone de couplage 71 restera stable en couleur. Ainsi, la rotation autour d'un axe du composant induit une variation de couleur rapide pour l'une des zones, qui correspond dans cet exemple à un motif de forme caractéristique, tandis que la rotation autour de l'axe perpendiculaire induit une variation rapide de la zone complémentaire.

Un observateur pourra facilement vérifier l'authenticité d'un document de valeur sécurisé grâce à un tel composant, et ce, à différents niveaux de sécurité. Il lui suffira d'observer en lumière blanche non polarisée le composant en transmission. En faisant varier l'angle d'observation du composant en tilt autour d'un des axes du motif, il observera une variation rapide de la couleur dans une zone. Cette variation sera d'autant plus caractéristique que dans une zone complémentaire, la couleur variera très peu. Par ailleurs, la présence d'une zone de référence non structurée (zone 73 dans l'exemple de la figure 7) et donc opaque, permettra de mettre en évidence la transparence des zones de couplage. Pour un deuxième niveau de vérification, il pourra faire varier l'angle d'incidence du composant autour d'un axe perpendiculaire au premier axe. Il observera alors une variation rapide de la couleur dans la zone complémentaire à la première.

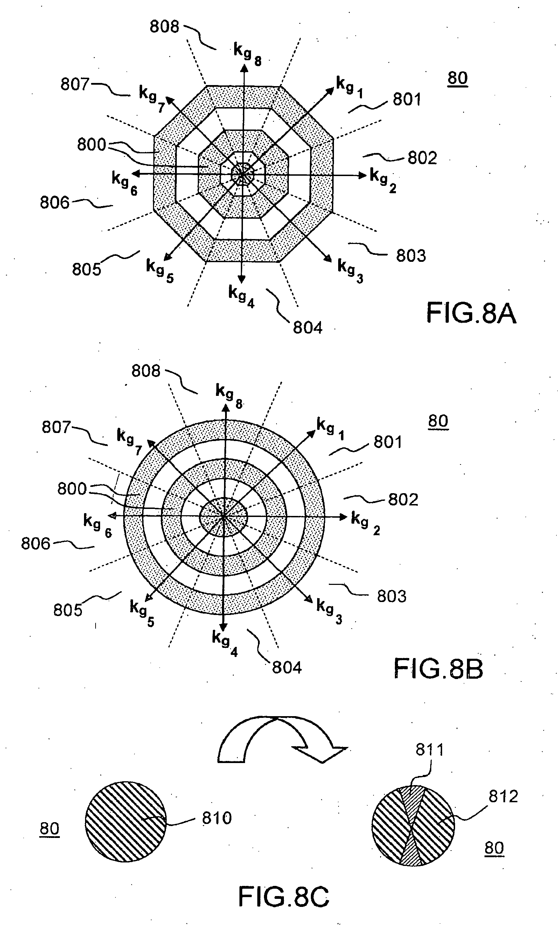

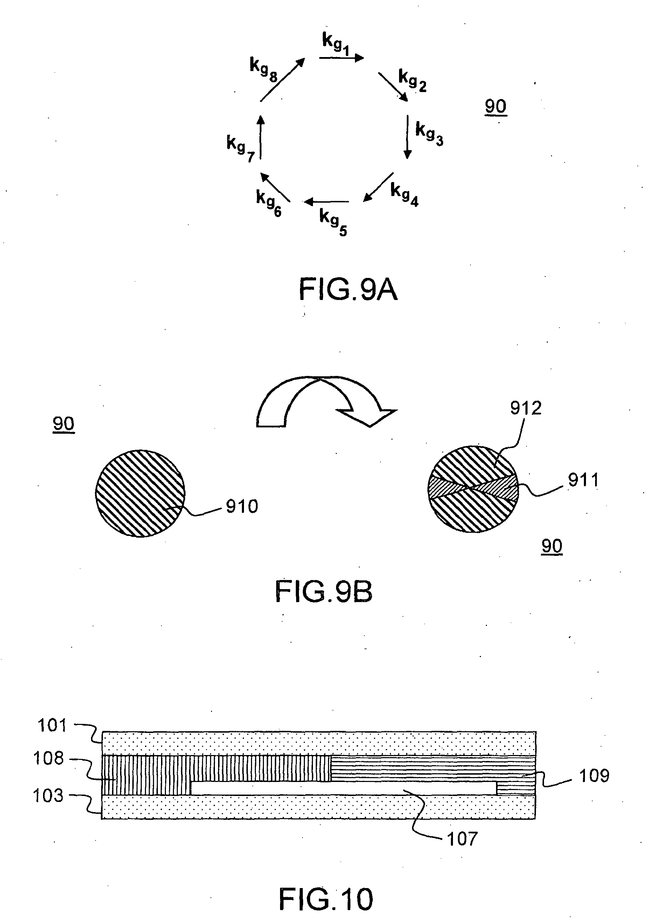

Les figures 8 et 9 illustrent deux variantes d'un composant de sécurité selon l'invention avec des zones de couplage dont les vecteurs réseaux sont perpendiculaires deux à deux.

Les figures 8A et 8B illustrent des composants de sécurité avec des ondulations 800 agencées de façon concentrique. Les ondulations 800 peuvent présenter des formes polygonales (figure 8A) ou circulaires (figure 8B). On peut définir une pluralité de zones de couplage référencées 801 à 808 dans chacune desquelles des portions d'ondulations sont sensiblement rectilignes et parallèles formant un réseau de couplage défini par un vecteur réseau $k_{g1}$ à $k_{g8}$.

Si un observateur observe en transmission à incidence normale un composant de sécurité du type du composant 80 ainsi décrit, il verra une pastille 810 de couleur uniforme (figure 8C), définie par la bande spectrale autour de la longueur d'onde à laquelle les réseaux de couplage sont optimisés. Cette couleur dépend donc du pas et de la profondeur des ondulations 800, ainsi que de l'épaisseur de la couche métallique. Si un observateur applique un tilt sur le composant, c'est à dire s'il fait varier l'angle d'incidence, les zones de couplage 811 dont les vecteurs réseau sont perpendiculaires à l'axe de rotation du composant (zones de couplage symétrique par rapport au centre de symétrie du composant) verront leurs couleurs varier très rapidement, tandis que le reste de la pastille (812, figure 8C) restera stable en couleur.

Du fait de la symétrie axiale du composant autour de l'axe x de la figure 1A, quelle que soit l'orientation en azimut du composant, on pourra observer une variation de la couleur de deux zones symétriques du composant par rotation de celui-ci selon un axe contenu dans le plan du composant (tilt). Par ailleurs, à azimut donné, en faisant varier l'axe de rotation du composant, on observera la variation de couleur sur d'autres zones du composant, correspondant aux deux zones symétriques pour lesquelles le vecteur réseau est sensiblement perpendiculaire à l'axe de rotation, rendant là encore le composant de sécurité très facilement authentifiable.

La figure 9A représente schématiquement un composant de sécurité 90 également à symétrie axiale, qui présenterait des ondulations agencées de façon radiale (non représentées sur la figure 9A), de telle sorte que localement on puisse définir des zones de couplage dans lesquelles les ondulations sont sensiblement rectilignes et linéaires, définissant dans chaque zone un vecteur réseau $k_{gi}$ de direction perpendiculaire à la direction principale des ondulations de la zone.

Là encore, comme illustré sur la figure 9B, un observateur observant en transmission l'échantillon à incidence normale verra une couleur sensiblement uniforme correspondant à la longueur d'onde de couplage définie par le pas et la profondeur des ondulations. En appliquant un tilt au composant, il observera une variation rapide de la couleur dans deux zones symétriques dont les vecteurs réseau sont perpendiculaires à l'axe de rotation du composant. Comme dans le cas du composant décrit sur la figure 8, l'effet ne sera pas sensible à la position en azimut du composant du fait de la symétrie axiale et une rotation selon un axe différent entraînera une variation de couleur dans une autre zone du composant.

Les composants de sécurité tels que décrits précédemment peuvent être réalisés de la façon suivante. Les structures optiques (ondulations) des différentes zones sont enregistrées par photolithographie ou lithographie par faisceau d'électrons sur un support photosensible ou « photorésist » selon l'expression anglo-saxonne. Une étape de galvanoplastie permet de reporter ces structures optiques dans un matériau résistant par exemple à base de Nickel pour réaliser la matrice ou « master ». Un estampage est réalisé à partir de la matrice pour transférer la microstructure sur un film et structurer la couche en matériau diélectrique 101 (figure 1A), typiquement un vernis d'estampage de quelques microns d'épaisseur porté par un film de 12 μm à 50 μm en matériau polymère, par exemple en PET (polyéthylène téréphtalate). L'estampage peut être fait par pressage à chaud du matériau diélectrique (« hot embossing ») ou par moulage (« casting »). L'indice de réfraction de la couche formée du vernis d'estampage est typiquement de 1,5. Vient ensuite la métallisation de la couche ainsi embossée. La métallisation est faite sous vide, de façon parfaitement contrôlée en épaisseur, avec l'un par exemple des métaux suivants : argent, aluminium, or, chrome, cuivre, etc. Une couche de fermeture d'indice de réfraction contrôlé est ensuite appliquée, par exemple par un procédé d'enduction. Pour certaines applications, telles que les produits de laminage ou de marquage à chaud, cette couche peut être la couche adhésive. La couche de fermeture, qui forme la couche 103 (figure 1A) présente un indice de réfraction sensiblement le même que celui de la couche embossée, autour de 1,5, avec une épaisseur supérieure à plusieurs microns. Selon la destination finale du produit, un adhésif peut être appliqué sur la couche de fermeture.

Selon une variante, il est possible au moment de l'étape de métallisation d'appliquer plusieurs métaux différents, par exemple pour rechercher des effets visuels différents. Pour cela, on pourra par exemple appliquer avec un motif donné une encre soluble sur la couche embossée. Lors de la métallisation avec le premier métal, celui-ci est appliqué uniformément sur la couche mais ne subsiste que sur les zones où ne se trouve pas l'encre lorsque l'encre est retirée. Ensuite une deuxième métallisation sélective est réalisée comprenant également une étape d'impression préalable d'encre soluble permettant de sélectionner les zones d'application du deuxième métal. Il est possible lors de l'application du deuxième métal que les couches métalliques se superposent localement, formant des zones de plus grande densité optique, ou au contraire qu'il en résulte des zones non métallisées qui, une fois rebouchées par la couche de fermeture, formeront des zones transparents dans le composant.

Selon une variante, les zones métalliques différentes peuvent correspondre à des zones de couplage différentes. Autrement dit, le premier métal est appliqué sur une ou plusieurs première(s) zone(s) de couplage, tandis que le deuxième métal est appliqué sur une ou plusieurs autre(s) deuxième(s) zones de couplage, permettant dans les différentes zones de couplage des effets colorés distincts. Alternativement, les différents métaux peuvent être déposés selon des zones qui ne correspondent pas aux zones de couplage.

Avantageusement, les zones plus opaques qui nécessitent au moins 2 métallisations ou au contraire, plus transparentes qui peuvent exister dès la première métallisation partielle, pourront être exploitées pour former des éléments graphiques de séparation entre les zones formées des différents métaux. Ces éléments seront utilisés par l'homme du métier pour renforcer la force du design et donc une meilleure lisibilité pour la personne en charge du contrôle.

La figure 10 représente de façon schématique une vue en coupe (partielle) du composant ainsi obtenu. Seules sont représentées sur cette figure les couches fonctionnelles pour l'obtention de l'effet plasmonique. Les éventuels films de support ou adhésif ne sont pas représentés. Entre les couches 101 et 103 en matériau diélectrique, se trouvent les deux couches de métal 108, 109. La zone 107 représente la zone où la couche 103 est embossée et les couches de métal structurées, c'est-à-dire la zone où se trouvent les ondulations (non représentées). Selon une variante, les différents métaux pourront correspondre à différentes zones de couplage. Du fait de la nature différente des métaux utilisés, un tel composant pourra présenter des effets colorés différents en fonction des zones aussi bien lorsque l'on observe la couleur réfléchie par le matériau que lors de l'observation en transmission des ondes plasmoniques. En effet la couleur « plasmonique » d'un réseau résulte du réseau et de la nature de la couche de métal. Par ailleurs, la mise en oeuvre étant plus complexe, un tel produit présente une résistance potentielle à la contrefaçon beaucoup plus élevée.

Comme cela apparaît au vue de l'exemple de méthode de fabrication décrite ci-dessus, l'inclusion d'un composant optique de sécurité selon l'invention dans un document sécurisé est parfaitement compatible avec la présence dans le même document de structures à base de réseaux habituellement utilisées pour la réalisation de composants holographiques.

Notamment, il sera possible de réaliser un élément optique de sécurité comprenant un ou plusieurs composants de type plasmonique tels que décrits précédemment et un ou plusieurs autres type de composants optiques de sécurité, par exemple de type holographique.

Pour cela une matrice pourra être réalisée par enregistrement des différents motifs correspondants aux différents composants optiques de sécurité sur le support photorésist puis galvanoplastie. L'estampage peut ensuite être réalisé à partir de la matrice pour transférer les différentes microstructures sur le film en matériau polymère, destiné à l'embossage. La métallisation dont l'épaisseur doit être contrôlée pour les composants à effet plasmonique pourra être faite sur l'ensemble du film, car elle ne gênera pas les autres composants de type DOVID fonctionnant en réflexion.

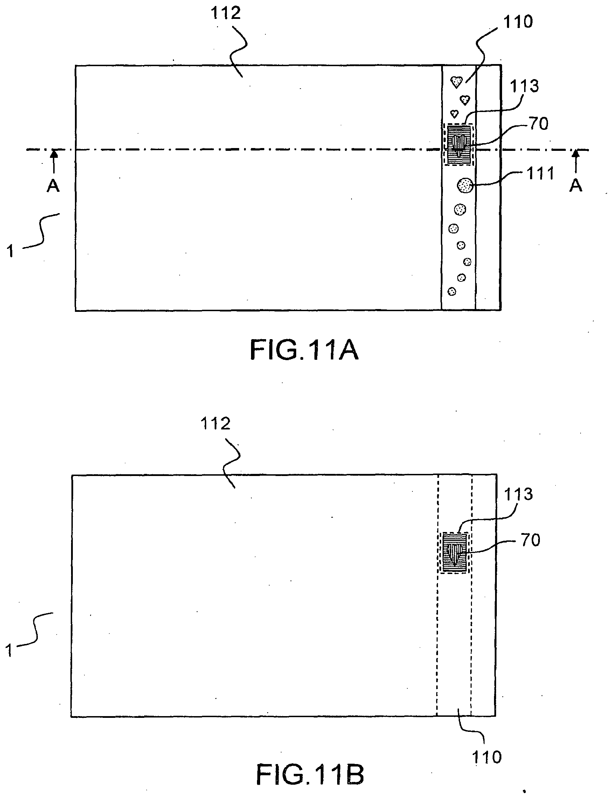

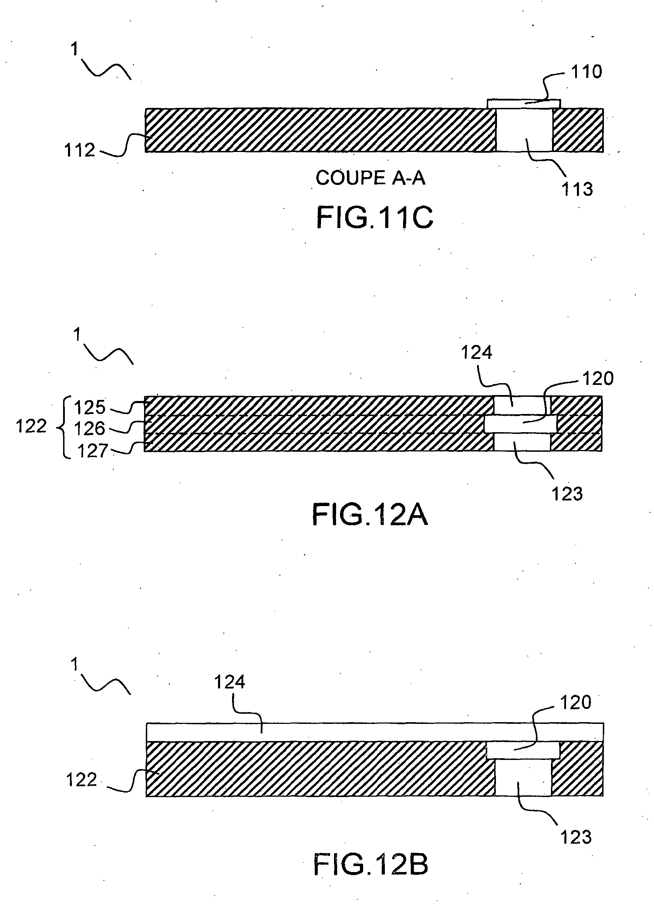

Les figures 11A à 11C représentent un document sécurisé 1, par exemple un document de valeur de type billet de banque, ainsi équipé d'un élément de sécurité 110 comprenant un composant optique de sécurité 70 de type plasmonique et d'autres composants optiques de sécurité 111, par exemple de type holographique. La figure 11A représente une vue de dessus de ce composant, la figure 11B représente une vue de dessous et la figure 11C une vue en coupe.

L'élément de sécurité 110 se présente sous forme d'une bande, typiquement de largeur 15 mm qui vient se fixer sur un support 112 du document 1. L'élément de sécurité 110 est fixé au support 112 par des moyens connus. Par exemple, dans le cas d'un document présentant une zone transparente solide, l'élément de sécurité peut être fixé par transfert à chaud réactivant une couche adhésive transparente préalablement appliquée sur la couche de fermeture 101. Dans ce cas, une couche de détachement (par exemple une cire) peut être appliquée entre le vernis d'estampage 103 et le film support en PET (non représenté sur la figure 1A ou 10). On transfert l'élément de sécurité sur le document en pressant à chaud l'élément de sécurité sur le document, le composant plasmonique se trouvant face à la zone transparente. Pendant le transfert, le film adhésif colle sur le support 112 du document et la couche de détachement ainsi que le film support sont retirés. Dans le support 112 est prévue une fenêtre de transparence 113 au niveau du composant de type plasmonique 70. Vu de dessus, tous les composants optiques de sécurité seront visibles sur le document sécurisé 1 et contrôlables en réflexion selon les différents procédés connus de l'art antérieur. Vus de dessous, seul(s) le ou les composants de type plasmonique seront visibles ; ils pourront être contrôlés en transmission, comme cela a été décrit précédemment.

Les figures 12A et 12B illustrent par des vues en coupe deux variantes d'un exemple de réalisation d'un document sécurisé 1 équipé d'un élément de sécurité comprenant un composant optique de sécurité 120. Dans ces deux exemples, le composant optique de sécurité, ou l'élément optique de sécurité supportant le composant optique de sécurité, est encapsulé dans le support 122 du document sécurisé. Dans l'exemple de la figure 12A, le document sécurisé 1 est par exemple obtenu par laminage de plusieurs couches 125, 126, 127, le composant optique de sécurité étant intégré dans la couche 126 du milieu, tandis que des zones de transparence 123, 124 sont prévues dans les couches extérieures 123, 124 pour assurer l'observation en transparence du composant optique de sécurité 120. Selon une variante, les couches 125, 126, 127 peuvent être fusionnées pour former un support 122 homogène dans lequel le composant optique de sécurité se trouve encapsulé. Dans l'exemple de la figure 12B, le composant optique de sécurité est fixé sur une première couche 122 formant support, l'ensemble étant recouvert d'une couche en matériau transparent 124. Une fenêtre de transparence 123 est prévue dans la couche support 122 pour assurer l'observation en transparence du composant optique de sécurité 120. Cette fenêtre de transparence peut formée de vide ou d'un matériau localement transparent. Le document 1 ainsi réalisé est par exemple un document de sécurité comme une carte d'identité ou un billet de banque muni de son fil de sécurité.

Le document sécurisé ainsi obtenu est très facilement contrôlable par un utilisateur peu expérimenté, et avec une grande fiabilité. Comme on l'a montré, le composant optique de sécurité de type plasmonique selon l'invention réalisé pourra se présenter comme un film de sécurité dont les caractéristiques peuvent être contrôlées à l'oeil dans le visible. Une authentification visuelle du document sécurisé est donc possible, y compris en lumière naturelle. Cette authentification, basée sur des effets visuels en transmission différents selon l'axe de rotation du composant, est particulièrement facile à réaliser.

En pratique, un observateur pourra contrôler le document sécurisé en observant en transmission le composant de type plasmonique devant une source de lumière blanche. Alternativement, on pourra contrôler le composant de sécurité en le plaçant sur un support lumineux.

Bien que décrite à travers un certain nombre d'exemples de réalisation, le composant optique de sécurité selon l'invention et le procédé de fabrication dudit composant comprennent différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

**Revendications**

1. Composant optique de sécurité à effet plasmonique destiné à être observé en transmission, comprenant :

    - deux couches (101, 103) en matériau diélectrique transparent,
    - une couche métallique (102) agencée entre lesdites couches en matériau diélectrique transparent pour former deux interfaces diélectrique - métal (105, 106) **caractérisé en ce que** la couche métallique est structurée pour former sur une partie au moins de sa surface des ondulations (104) aptes à coupler des modes de plasmon de surface supportés par lesdites interfaces diélectrique - métal avec une onde lumineuse incidente, les ondulations étant agencées dans une première zone de couplage selon une première direction principale et dans au moins une deuxième zone de couplage distincte de ladite première zone selon une deuxième direction principale sensiblement perpendiculaire à ladite première direction principale, ladite couche métallique étant continue sur chacune desdites zones de couplage.

2. Composant optique de sécurité selon la revendication 1, dans lequel deux desdites zones de couplage forment des motifs complémentaires (71, 72).

3. Composant optique de sécurité selon la revendication 1, dans lequel au moins une partie des ondulations sont agencées de façon concentrique.

4. Composant optique de sécurité selon la revendication 1, dans lequel au moins une partie des ondulations sont agencées de façon radiale.

5. Composant optique de sécurité selon l'une des revendications précédentes, dans lequel ladite couche métallique comprend en outre une zone non structurée.

6. Composant optique de sécurité selon l'une quelconque des revendications précédentes, dans lequel lesdites ondulations présentent un pas compris entre 100 nm et 600 nm et une profondeur comprise entre 10% et 30% du pas.

7. Composant optique de sécurité selon l'une quelconque des revendications précédentes, dans lequel la différence des indices de réfraction desdits matériaux diélectriques transparents formant chacune desdites couches est inférieure à 0,1.

8. Composant optique de sécurité selon l'une quelconque des revendications précédentes, dans lequel une partie au moins de la couche métallique est formée en argent et son épaisseur est sensiblement comprise entre 20 et 60 nm.

9. Composant optique de sécurité selon l'une quelconque des revendications précédentes, dans lequel une partie au moins de la couche métallique est formée en aluminium et son épaisseur est sensiblement comprise entre 10 et 30 nm.

10. Composant optique de sécurité selon l'une quelconque des revendications précédentes, dans lequel la couche métallique est formée d'un seul métal.

**11.** Composant optique de sécurité selon l'une quelconque des revendications 1 à 9, dans lequel la couche métallique comprend au moins deux parties formées chacune d'un métal différent.

**12.** Elément optique de sécurité destiné à la sécurisation d'un document et comprenant au moins un composant optique de sécurité selon l'une des revendications précédentes.

**13.** Elément optique de sécurité selon la revendication 12, comprenant en outre un film support portant une desdites couches en matériau diélectrique transparent.

**14.** Elément optique de sécurité selon l'une quelconque des revendications 12 ou 13 comprenant en outre un film adhésif disposé sur l'une desdites couches en matériau diélectrique transparent.

**15.** Document sécurisé (1) comprenant un support (112) et un composant optique de sécurité selon l'une quelconque des revendications 1 à 11 ou un élément optique de sécurité selon l'une quelconque des revendications 12 à 14, fixé sur ledit support, ledit support comprenant une zone de transparence (113) au niveau de laquelle est agencé ledit composant optique de sécurité.

**16.** Document sécurisé (1) comprenant un support (122) et un composant optique de sécurité selon l'une quelconque des revendications 1 à 11 ou un élément optique de sécurité selon l'une quelconque des revendications 12 à 14, encapsulé dans ledit support, ledit support comprenant des zones de transparence (123, 124) de part et d'autre dudit composant optique de sécurité.

**17.** Méthode de fabrication d'un composant optique de sécurité à effet plasmonique destiné à être observé en transmission comprenant :

- le dépôt d'une couche métallique sur une première couche (103) en matériau diélectrique transparent,
- l'encapsulation de ladite couche métallique par une seconde couche (101) en matériau diélectrique transparent, pour former deux interfaces diélectrique - métal (105, 106),

la méthode étant **caractérisée en ce que** ladite couche métallique est structurée pour former sur une partie au moins de sa surface des ondulations (104) aptes à coupler des modes de plasmon de surface supportés par lesdites interfaces diélectrique - métal avec une onde lumineuse incidente, les ondulations étant agencées dans une première zone de couplage selon une première direction principale et dans au moins une deuxième zone de couplage distincte de ladite première zone de couplage selon une deuxième direction principale sensiblement perpendiculaire à ladite première direction principale, ladite couche métallique étant continue sur chacune desdites zones de couplage.

**18.** Méthode selon la revendication 17, dans laquelle ladite première couche en matériau diélectrique est structurée pour former lesdites ondulations et la couche métallique est déposée avec une épaisseur sensiblement constante sur ladite première couche ainsi structurée.

**19.** Méthode selon la revendication 18, dans laquelle le dépôt de la couche métallique comprend le dépôt d'une première couche (108) comprenant un premier métal sur une première partie de la surface de ladite première couche (103) en matériau diélectrique et le dépôt d'au moins une seconde couche (109) comprenant un second métal sur une deuxième partie de la surface de ladite première couche (103) en matériau diélectrique.

**20.** Méthode selon les revendications 17 à 19, dans laquelle le dépôt de la couche métallique est fait de manière sélective permettant de définir des motifs macroscopiques visibles en transparence à l'œil nu.

**Patentansprüche**

**1.** Optische Sicherheitskomponente mit Plasmonen-Wirkung, die dazu bestimmt ist, in Durchsicht beobachtet zu werden, umfassend:

- zwei Schichten (101, 103) aus transparentem dielektrischen Material,
- eine Metallschicht (102), die zwischen den Schichten aus transparentem dielektrischen Material angeordnet ist, um zwei Metall-Dielektrikum-Grenzflächen (105, 106) zu bilden, **dadurch gekennzeichnet, dass** die Metallschicht strukturiert ist, um mindestens auf einem Teil ihrer Oberfläche Wellen (104) zu bilden, die geeignet sind, Oberflächenplasmonenmoden, die durch die Metall-Dielektrikum-Grenzflächen getragen sind, mit einer einfallenden Lichtwelle zu koppeln, wobei die Wellen in einem ersten Kopplungsbereich entlang einer ersten Hauptrichtung und in mindestens einem zweiten Kopplungsbereich, der sich von dem ersten Kopplungsbereich unterscheidet, entlang einer zweiten Hauptrichtung, die im Wesentlichen senkrecht zu der ersten Hauptrichtung ist, angeordnet sind, wobei die Metallschicht auf jedem der Kopplungsbereiche durchgehend ist.

**2.** Optische Sicherheitskomponente gemäß Anspruch 1, wobei die zwei Kopplungsbereiche komplementäre Muster (71, 72) bilden.

**3.** Optische Sicherheitskomponente gemäß Anspruch 1, wobei mindestens ein Teil der Wellen konzentrisch angeordnet ist.

**4.** Optische Sicherheitskomponente gemäß Anspruch 1, wobei mindestens ein Teil der Wellen radial angeordnet ist.

**5.** Optische Sicherheitskomponente gemäß einem der vorhergehenden Ansprüche, wobei die Metallschicht außerdem einen nicht strukturierten Bereich aufweist.

**6.** Optische Sicherheitskomponente gemäß einem der vorhergehenden Ansprüche, wobei die Wellen eine Länge, die zwischen 100 nm und 600 nm beträgt, und eine Tiefe, die zwischen 10 % und 30 % der Länge beträgt, aufweisen.

**7.** Optische Sicherheitskomponente gemäß einem der vorhergehenden Ansprüche, wobei die Brechungsindexdifferenz der transparenten dielektrischen Materialien, die jeweils die Schichten bilden, niedriger als 0,1 ist,

**8.** Optische Sicherheitskomponente gemäß einem der vorhergehenden Ansprüche, wobei mindestens ein Teil der Metallschicht aus Silber gebildet ist und seine Dicke im Wesentlichen zwischen 20 und 60 mm beträgt.

**9.** Optische Sicherheitskomponente gemäß einem der vorhergehenden Ansprüche, wobei mindestens ein Bereich der Metallschicht aus Aluminium gebildet ist und seine Dicke im Wesentlichen zwischen 10 und 30 mm beträgt.

**10.** Optische Sicherheitskomponente gemäß einem der vorhergehenden Ansprüche, wobei die Metallschicht aus einem einzigen Metall gebildet ist.

**11.** Optische Sicherheitskomponente gemäß einem der Ansprüche 1 bis 9, wobei die Metallschicht mindestens zwei Teile aufweist, die jeweils aus einem unterschiedlichen Metall gebildet sind.

**12.** Optisches Sicherheitselement, das zur Sicherung eines Dokuments bestimmt ist und mindestens eine optische Sicherheitskomponente gemäß einem der vorhergehenden Ansprüche aufweist.

**13.** Optisches Sicherheitselement gemäß Anspruch 12, umfassend außerdem eine Trägerfolie, die eine der Schichten aus transparentem dielektrischen Material trägt.

**14.** Optisches Sicherheitselement gemäß einem der Ansprüche 12 oder 13, umfassend außerdem eine Klebfolie, die auf einer der Schichten aus transparentem dielektrischen Material angeordnet ist.

**15.** Sicherheitsdokument (1), umfassend einen Träger (112) und eine optische Sicherheitskomponente gemäß einem der Ansprüche 1 bis 11 oder ein optisches Sicherheitselement gemäß einem der Ansprüche 12 bis 14, das auf dem Träger befestigt ist, wobei der Träger einen Transparenzbereich (113) aufweist, an dem die optische Sicherheitskomponente angeordnet ist.

**16.** Sicherheitsdokument (1), umfassend einen Träger (122) und eine optische Sicherheitskomponente gemäß einem der Ansprüche 1 bis 11 oder ein optisches Sicherheitselement gemäß einem der Ansprüche 12 bis 14, das in dem Träger eingekapselt ist, wobei der Träger Transparenzbereiche (123, 124) auf beiden Seiten der optischen Sicherheitskomponente aufweist.

**17.** Verfahren zur Herstellung einer optischen Sicherheitskomponente mit Plasmonen-Wirkung, die dazu bestimmt ist, in Durchsicht beobachtet zu werden, umfassend:

    - das Auftragen einer Metallschicht auf eine erste Schicht (103) aus transparentem dielektrischen Material,
    - das Einkapseln der Metallschicht durch eine zweite Schicht (101) aus transparentem dielektrischem Material, um zwei Metall-Dielektrikum-Grenzflächen (105, 106) zu bilden,

wobei das Verfahren **dadurch gekennzeichnet ist, dass** die Metallschicht strukturiert wird, um mindestens auf einem Teil ihrer Oberfläche Wellen (104) zu bilden, die geeignet sind, Oberflächenplasmonenmoden, die durch die Metall-Dielektrikum-Grenzflächen getragen sind, mit einer einfallenden Lichtwelle zu koppeln, wobei die Wellen in einem ersten Kopplungsbereich entlang einer ersten Hauptrichtung und in mindestens einem zweiten Kopplungsbereich, der sich von dem ersten Kopplungsbereich unterscheidet, entlang einer zweiten Hauptrichtung, die im Wesentlichen senkrecht zu der ersten Hauptrichtung ist, angeordnet werden, wobei die Metallschicht auf jedem der Kopplungsbereiche durchgehend ist.

**18.** Verfahren gemäß Anspruch 17, wobei die erste Schicht aus dielektrischem Material strukturiert wird, um die Wellen zu bilden, und die Metallschicht mit einer Dicke aufgetragen wird, die im Wesentlichen konstant auf der ersten Schicht ist, die auf diese Weise strukturiert wird.

19. Verfahren gemäß Anspruch 18, wobei das Auftragen der Metallschicht das Auftragen einer ersten Schicht (108), die ein erstes Metall auf einen ersten Abschnitt der Oberfläche der ersten Schicht (103) aus dielektrischem Material aufweist, und das Auftragen von mindestens einer zweiten Schicht (109) aufweist, die ein zweites Metall auf einen zweiten Abschnitt der Oberfläche der ersten Schicht (103) aus dielektrischem Material aufweist.

20. Verfahren gemäß den Ansprüchen 17 bis 19, wobei das Auftragen der Metallschicht selektiv vorgenommen wird, um makroskopische Muster definieren zu können, die in Durchsicht mit bloßem Auge sichtbar sind.

**Claims**

1. A plasmonic optical security component intended to be observed in transmission, comprising:

   - two transparent dielectric layers (101, 103); and
   - a metal layer (102) arranged between said transparent dielectric layers in order to form two dielectric/metal interfaces (105, 106), **characterized in that** the metal layer is structured to form corrugations (104) on at least one part of the surface of the metal layer, the corrugations (104) being able to couple surface plasmon modes supported by said dielectric/metal interfaces with an incident light wave, the corrugations being arranged in a first main direction in a first coupling zone, and in a second main direction, substantially perpendicular to said first main direction, in at least one second coupling zone distinct from the first coupling zone, said metal layer being continuous in each of said coupling zones.

2. The optical security component as claimed in claim 1, in which two of said coupling zones form complementary patterns (71, 72).

3. The optical security component as claimed in claim 1, in which at least one part of the corrugations are arranged concentrically.

4. The optical security component as claimed in claim 1, in which at least one part of the corrugations are arranged radially.

5. The optical security component as claimed in any one of the preceding claims, in which said metal layer furthermore comprises an unstructured zone.

6. The optical security component as claimed in any one of the preceding claims, in which said corrugations have a pitch comprised between 100 nm and 600 nm and a depth comprised between 10% and 30% of the pitch.

7. The optical security component as claimed in any one of the preceding claims, in which the difference between the refractive indices of said transparent dielectrics forming each of said layers is less than 0.1.

8. The optical security component as claimed in any one of the preceding claims, in which at least one part of the metal layer is formed of silver and its thickness is substantially comprised between 20 and 60 nm.

9. The optical security component as claimed in any one of the preceding claims, in which at least one part of the metal layer is formed of aluminum and its thickness is substantially comprised between 10 and 30 nm.

10. The optical security component as claimed in any one of the preceding claims, in which the metal layer is formed of a single metal.

11. The optical security component as claimed in any one of claims 1 to 9, in which the metal layer comprises at least two parts each of which is formed of a different metal.

12. An optical security element intended to secure a document and comprising at least one optical security component as claimed in one of the preceding claims.

13. The optical security element as claimed in claim 12, furthermore comprising a supporting film bearing one of said transparent dielectric layers.

14. The optical security element as claimed in either of claims 12 and 13, furthermore comprising an adhesive film placed on one of said transparent dielectric layers.

15. A secure document (1) comprising a support (112) and an optical security component as claimed in any one of claims 1 to 11, or an optical security element as claimed in any one of claims 12 to 14, fixed to said support, said support comprising a transparent zone (113) on which said optical security component is arranged.

16. A secure document (1) comprising a support (122) and an optical security component as claimed in any one of claims 1 to 11, or an optical security element as claimed in any one of claims 12 to 14, encapsulated in said support, said support comprising transparent zones (123, 124) on either side of said optical security component.

17. A method for manufacturing a plasmonic optical security component, intended to be observed in transmission, comprising

> - depositing a metal layer on a first transparent dielectric layer (103); and
> - encapsulating said metal layer with a second transparent dielectric layer (101), in order to form to dielectric/metal interfaces (105, 106),

the method being **characterized in that** the metal layer is structured to form corrugations (104) on at least one part of the surface of the metal layer, the corrugations (104) being able to couple surface plasmon modes supported by said dielectric/metal interfaces with an incident light wave, the corrugations being arranged in a first main direction in a first coupling zone, and in a second main direction, substantially perpendicular to said first main direction, in at least one second coupling zone distinct from the first coupling zone, said metal layer being continuous in each of said coupling zones.

18. The method as claimed in claim 17, in which said first dielectric layer is structured to form said corrugations, and the metal layer is deposited, with a substantially constant thickness, on said thus structured first layer.

19. The method as claimed in claim 18, in which the deposition of the metal layer comprises depositing a first layer (108) comprising a first metal on a first part of the surface of said first dielectric layer (103) and depositing at least one second layer (109) comprising a second metal on a second part of the surface of said first dielectric layer (103).

20. The method as claimed in claims 17 to 19, in which the deposition of the metal layer is carried out selectively, allowing macroscopic patterns that are visible to the naked eye in transparency to be defined.

FIG.1A

FIG.1B

FIG.2A

FIG.2B

301

101
102
103

10

20 → Aucune information visuelle

**FIG.3A**

301

105
101
102
103
104
106

10

303
302

20 → Information visuelle
en transmission

**FIG.3B**

Information visuelle
en transmission

FIG.3C

FIG.3D

Information visuelle
en transmission

FIG.4

FIG.5A

FIG.5B

FIG.6A

FIG.6B

EP 2 695 006 B2

FIG.7A

FIG.7B

FIG.7C

FIG.7D

22

FIG.8A

FIG.8B

FIG.8C

$kg_8$  $kg_1$  $kg_2$  $kg_3$  $kg_4$  $kg_5$  $kg_6$  $kg_7$

90

## FIG.9A

90

910

912

911

90

## FIG.9B

101
108
103

109

107

## FIG.10

**FIG.11A**

**FIG.11B**

COUPE A-A

## FIG.11C

## FIG.12A

## FIG.12B

**RÉFÉRENCES CITÉES DANS LA DESCRIPTION**

**Documents brevets cités dans la description**

- US 6428051 B

- US 20100307705 A

**Littérature non-brevet citée dans la description**

- **I. AUBRECHT et al.** Polarization-sensitive multilayer diffractive structures for document security. *Proceedings of SPIE,* 2009, vol. 7358